# EUROPEAN PATENT SPECIFICATION

(11) **EP 2 675 291 B1**
(45) Date of publication and mention of the grant of the patent: **07.10.2015**
(21) Application number: 13703475.7
(22) Date of filing: 03.01.2013
(51) Int. Cl.: A23L 1/06, A23L 1/09, A23L 1/212, A23L 1/29, A23L 2/02, A23L 2/60, A23G 9/34

(54) **PUREE COMPOSITIONS HAVING SPECIFIC CARBOHYDRATE RATIOS AND METHODS FOR USING SAME**
PUREE ZUBEREITUNGEN ENTHALTEND GLUZIDEN IN SPEZIFISISCHEN VERHÄLTNISSEN UND DEREN VERWENDUNG
COMPOSITIONS SOUS FORME DE PUREE AYANT DES PROPORTIONS SPECIFIQUES DE GLUCIDES ET LEUR UTILISATION

(30) Priority: 07.05.2012 US 201261643371 P; 11.05.2012 US 201261645808 P; 23.05.2012 US 201261650817 P; 07.09.2012 US 201261697903 P; 19.10.2012 US 201261716012 P
(43) Date of publication of application: 25.12.2013
(73) Proprietor: Premier Nutrition Corporation, Emeryville CA 94608 (US)
(72) Inventor: SAVANT, Vivek Dilip, Norton Shores, Michigan 49444 (US); HAILE, Tesfalidet, 1034 Boussens, Vaud (CH); JIMENEZ, Frank Craig, Mendham, New Jersey 07945 (US); BOICE, Cynthia Marie, Randolph, New Jersey 07869 (US); WELSH, Karlyn Ross, Whitehouse Station, New Jersey 08889 (US); ZALTAS, Eric Scott, Montclair, New Jersey 07043 (US); GUAN, Junjie, Tenafly, New Jersey 07570 (US); REAVLIN, Lisa Diane, Montclair, New Jersey 07042 (US)
(74) Representative: Rupp, Christian
(86) International application number: PCT/IB2013/050074
(87) International publication number: WO 2013/167983

(56) References cited:
- WO-A2-2012/145346
- SU-A1- 1 660 668
- US-A1- 2006 134 307
- US-A1- 2011 009 348
- US-A1- 2011 236 505
- US-A1- 2012 034 347

## Description

### BACKGROUND

The present disclosure relates generally to health and nutrition. More specifically, the present disclosure relates to puree nutritional compositions for enhancing performance and methods for using same.

There are many types of nutritional compositions currently on the market. Nutritional compositions can be targeted toward certain consumer types, for example, young, elderly, athletic, etc., based on the specific ingredients of the nutritional composition. For example, it is well established that carbohydrate ingestion during or before exercise improves endurance performance, as well as shorter duration exercise. However, nutritional compositions having a proper amount of carbohydrates necessary to fuel the body during exercise may have unappealing characteristics that discourage the athlete from consuming the composition. The performance compositions may be difficult to consume during exercise or may be too dense or heavy for consumption before or during exercise, or may have a chalky or bland taste. As a result, individuals can be less enticed by the taste or appearance of performance compositions and, as a result, may consume smaller amounts of nutritional products containing the necessary carbohydrates to properly fuel the body during performance. Additionally, the form of the product may prohibit individuals from consuming proper amounts of the nutritional product, which results in the individual consuming inadequate amounts of the carbohydrates required for the individual's performance activity.

One goal of nutritional support, therefore, is to provide puree nutritional compositions that can very efficiently provide individuals with carbohydrates, while at the same time providing a physically well-received product.

Compositions for providing nutrition for athletes and active persons are disclosed in e.g., US 2012/0034347; SU 1660668; and US 2011/0236505.

### SUMMARY

Nutritional compositions or products are provided. Methods for using the nutritional compositions or products are also provided. The invention relates to a puree nutritional composition which comprises at least one nut butter and includes dextrose, dextrose polymers, crystalline fructose, corn syrup, other grain/nut syrups consisting of rice syrup, agave syrup, palm syrup, or combinations thereof, and a puree selected from the group consisting of at least one fruit puree, at least one vegetable puree, at least one fruit puree concentrate, at least one vegetable puree concentrate, or combinations thereof. The composition has a carbohydrate fraction having glucose and fructose in a weight ratio from 0.5:1 to 5:1, comprises puree in an amount of 30 to 100%, and its carbohydrate fraction is present in an amount of 10g to 45g per serving size. That serving size is of 28.35 to 141.75g. In a further embodiment, the composition has a carbohydrate fraction having glucose and fructose in a weight ratio from about 1:1 to about 5:1.

The puree is provided in the nutritional compositions in amounts ranging from 30% to 100% by weight of the nutritional composition, or from about 40% to about 90%, or from about 50% to about 70%, or from about 60% to about 70%, or about 65% by weight of the nutritional composition. In an embodiment, the puree may be puree concentrate.

In an embodiment, the fruit puree is selected from the group consisting of apple, orange, pear, peach, strawberry, banana, cherry, pineapple, kiwi, grape, blueberry, raspberry, mango, guava, cranberry, blackberry, tropical fruits, Amazonian fruits, or combinations thereof.

In an embodiment, the vegetable puree is selected from the group consisting of artichoke, arugula, asparagus, avocado, beans, beet greens, broccoli, brussels sprout, cabbage, carrot, celery, chicory, collard greens, cucumber, eggplant, endive, kale, lettuce, onion, pea, peppers, potato, pumpkin, radicchio, spinach, squash, sweet potato, swiss chard, tomato, turnip greens, watercress, yam, zucchini, or combinations thereof.

In one embodiment, the puree composition includes at least one: dairy; or dairy substitute; or dairy and dairy substitute ingredient, is selected from any dairy or dairy substitute ingredient ordinarily known in the art.

In one embodiment, the dairy ingredient is selected from the group including, but not limited to: milk, milk powder, cultured milk, whole milk, skim milk, kefir, buttermilk, whey, high milk-fat, condensed milk, evaporated milk, caseinates, whey proteins, hydrolyzed milk, and milk proteins or combinations thereof.

In an embodiment, the dairy substitute ingredient is selected from the group including, but not limited to: rice milk, soy milk, soy proteins, plant cream, coconut milk, almond milk, peanut milk, coconut milk, gluten-free milk, artificial cream, coconut milk powder, and rice proteins or combinations thereof.

In an embodiment, the dairy-based composition includes only a naturally occurring amount of lactose.

In an embodiment, the dairy-based composition is substantially free of reducing sugars. The dairy-based composition may include only a naturally occurring amount of reducing sugars.

In an embodiment, the dairy-based composition is a yogurt-like product.

In one embodiment, the puree composition includes yogurt selected from any yogurt ordinarily known in the art.

In an embodiment, the yogurt is selected from the group including, but not limited to: full fat yogurt, low-fat yogurt, skim or fat-free yogurt, sweetened yogurt, flavored yogurt, Greek yogurt, soy yogurt, custard yogurt, liquid yogurt, European yogurt, yogurt powder, or combinations thereof.

In one embodiment, the puree composition includes a nut butter selected from any nut butter ordinarily known in the art.

In an embodiment, the nut butter is selected from the group including, but not limited to: peanut butter, almond butter, sunflower seed butter, cashew butter, hazelnut butter, macadamia nut butter, walnut butter, pecan butter, pistachio butter, pumpkin seed butter, sesame seed butter, soybean butter, or combinations thereof.

In one embodiment, the puree composition includes peanut butter.

In an embodiment, the carbohydrate fraction further includes maltodextrin.

In an embodiment, the puree composition includes cooked oats, oatmeal, or combinations thereof.

In an embodiment, the nutritional composition includes grains. The grain is selected from any grain ordinarily known in the art. In an embodiment, the grain is selected from the group including, but not limited, to: wheat, oat, rice, barley, amaranth, faro, teff, quinoa, spelt, kamut, buckwheat, rye, millet, wheat bran, psyllium, or combinations thereof.

In an embodiment, the nutritional composition includes functional spices. The functional spice is selected from any functional spice ordinarily known in the art. In an embodiment, the functional spice is selected from the group including, but not limited, to: cinnamon, curcumin, turmeric, nutmeg, cayenne, oregano, rosemary, ginger, mint, basil, garlic, or combinations thereof.

The carbohydrate fraction per serving is present in amounts to provide the nutritional compositions with carbohydrates in an amount ranging from about 10 g to about 45 g, or from about 12.5 g to about 40 g, or from about 15 g to about 35 g, or from about 20 g to about 30 g, or about 25 g carbohydrates.

The serving size of the nutritional composition is from about 28.35 g to about 141.75 g (about 1 to about 5 ounces), or from about 56.70 g to about 113.40 g (about 2 to about 4 ounces), or about 85.05 g (about 3 ounces).

In an embodiment, the nutritional composition includes at least one compound selected from the group consisting of aroma compounds, fiber, conservatives, guarana, acidifying agents, binding agents, gel building material, a flavoring, a coloring, or combinations thereof. The fiber may be present in an amount of less than about 3 g per serving size nutritional composition.

In an embodiment, the nutritional composition includes sodium in an amount ranging from about 100 mg to about 300 mg per serving size. The composition may also include sodium in an amount that is less than about 200 mg per serving size.

In an embodiment, the nutritional composition is not fermented.

In an embodiment, the nutritional composition includes essentially all natural ingredients.

In an embodiment, the nutritional composition includes essentially all organic ingredients.

In an embodiment, the nutritional composition includes no artificial ingredients.

In an embodiment, the nutritional composition includes at least one artificial sweetener.

In one embodiment, the nutritional composition includes high intensity sweeteners.

In an embodiment, the nutritional composition does not include any artificial preservatives.

In an embodiment, the nutritional composition does not include high fructose corn syrup.

In an embodiment, the nutritional composition does not include any contaminants banned under the World Anti-Doping Agency ("WADA") code.

In an embodiment, the nutritional composition includes chocolate.

In an embodiment, the nutritional composition includes cocoa.

In an embodiment, the nutritional composition includes fruit bits.

In yet another embodiment, the nutritional composition includes fruit mixed with cereal.

In an embodiment, the nutritional composition includes nitrates. The source of the nitrate is selected from any source ordinarily known in the art. In an embodiment, the nitrate is derived from fruits, vegetables, other natural sources, or combinations thereof. In an embodiment, the source of the nitrate is selected from the group including, but not limited to: beets, carrots, lettuce, green beans, spinach, parsley, cabbage, radishes, celery, collard greens, strawberries, currents, gooseberries, raspberries, cherries, apples, or combinations thereof.

In an embodiment, the nutritional composition is a snack. Alternatively, the nutritional composition is part of a meal.

In an embodiment, the nutritional composition is provided in a multi-chamber package, wherein the multi-chamber package is 2 or more chambers. In an embodiment, the nutritional composition is provided in a multi-chamber package. In an embodiment, the multi-chamber package can contain 2 or more different flavors. In an embodiment, the multi-chamber package can contain 2 or more portions. In an embodiment, the multi-chamber package can contain 1 portion divided into more than 1 chamber. In an embodiment, the multi-chamber package can contain a pre-, during-, end-, and post-exercise formulation. In an embodiment, the multi-chamber package is tailored for the sport or activity. The sport or activity is selected from any sport or activity ordinarily known in the art. In an embodiment, the sport or activity is selected from the group including, but not limited to: running, cycling, endurance training, muscle building, marathon, triathlon, Ironman, or combinations thereof.

In yet another embodiment, the nutritional composition is provided in a 4-pack system. The 4-pack system may contain a pre-, during-, end-, and post-exercise formulation.

In another embodiment, the 4-pack system is tailored to different stage of exercises. The 4-pack system may contain nitrates in the pre-exercise stage, glucose and fructose in a weight ratio from about 0.5:1 to about 5:1 or about 1:1 to about 5:1 with caffeine in the during-exercise stage, caffeine in the near end-exercise stage, and protein in the post-exercise stage. The 4-pack system can be sold as a kit and tailored for the sport or activity by varying the amount of a product specific for a given stage, contained in the kit.

In an embodiment, the nutritional composition is a 1 portion package. In an embodiment, the 1 portion package is tailored for specific needs of a sport or activity. The sport or activity is selected from any sport or activity ordinarily known in the art. In an embodiment, the sport or activity is selected from the group including, but not limited to: running, cycling, endurance training, muscle building, marathon, triathlon, Ironman, or combinations thereof.

In yet another embodiment, the nutritional composition or product may be consumed in a frozen form.

In one embodiment, the nutritional composition includes a thinner selected from any thinner ordinarily known in the art. In an embodiment, the nutritional composition provided in the form of a juice consistency includes a thinner selected from any thinner ordinarily known in the art.

In an embodiment, the thinner is selected from the group including, but not limited to: fruit juice, vegetable juice, coconut water, water, milk, or combinations thereof.

In an embodiment, the nutritional composition is provided in the form of a thick juice consistency. In an embodiment, the nutritional composition is shelf-stable for at least 12 months at ambient conditions.

In an embodiment, the nutritional composition is provided in the form of a drinkable product.

In yet another embodiment, the nutritional composition is added to a dilutant.

In an embodiment, the dilutant is used for the purposes of hydration.

In an embodiment, the nutritional composition is shelf-stable for at least 9 months at ambient conditions.

In an embodiment, the nutritional composition is shelf-stable for at least 18 months at ambient conditions.

In another embodiment, a method for providing nutrition to an athlete is provided. The method includes providing a puree nutritional composition including dextrose, dextrose polymers, crystalline fructose, corn syrup, other grain/nut syrups consisting of rice syrup, agave syrup, palm syrup, or combinations thereof, and a puree selected from the group consisting of at least one fruit puree, at least one vegetable puree, or combinations thereof, wherein the nutritional composition includes a carbohydrate fraction having glucose and fructose in a weight ratio from 0.5:1 to 5:1. The nutritional composition includes also at least one nut butter. The puree is present in the nutritional composition is an amount ranging from 30% to 100%, and the carbohydrate fraction is present in an amount ranging from 10 to 45g. In a further embodiment, the composition has a carbohydrate fraction having glucose and fructose in a weight ratio from about 1:1 to about 5:1.

The method further includes administering the puree nutritional composition to the athlete.

In another embodiment, the puree nutritional composition includes a functional ingredient selected from the group consisting of an electrolyte, caffeine, a vitamin, a mineral, a probiotic, a prebiotic, a symbiotic, a phytonutrient, ginseng a nucleotide, an amino acid, an antioxidant, a source of omega-3 fatty acids, or combinations thereof.

In an embodiment, the puree may be puree concentrate.

In an embodiment, the fruit puree is selected from the group consisting of apple, orange, pear, peach, strawberry, banana, cherry, pineapple, kiwi, grape, blueberry, raspberry, mango, guava, cranberry, blackberry, tropical fruits, Amazonian fruits, or combinations thereof.

In an embodiment, the vegetable puree is selected from the group consisting of artichoke, arugula, asparagus, avocado, beans, beet greens, broccoli, brussels sprout, cabbage, carrot, celery, chicory, collard greens, cucumber, eggplant, endive, kale, lettuce, onion, pea, peppers, potato, pumpkin, radicchio, spinach, squash, sweet potato, swiss chard, tomato, turnip greens, watercress, yam, zucchini, or combinations thereof.

In an embodiment, the carbohydrate fraction further includes maltodextrin.

The serving size of the nutritional composition is from about 28.35 g to about 141.75 g (about 1 to about 5 ounces), or from about 56.70 g to about 113.40 g (about 2 to about 4 ounces), or about 85.05 g (about 3 ounces).

In an embodiment, the nutritional composition includes at least one compound selected from the group consisting of aroma compounds, fiber, conservatives, guarana, acidifying agents, binding agents, gel building material, a flavoring, a coloring, or combinations thereof. The fiber may be present in an amount of less than about 3 g per serving size nutritional composition.

In an embodiment, the nutritional composition includes sodium in an amount ranging from about 100 mg to about 300 mg per serving size. The nutritional composition may also include sodium in an amount that is less than about 200 mg per serving size.

In an embodiment, the nutritional composition is not fermented.

In an embodiment, the nutritional composition includes essentially all natural ingredients.

In an embodiment, the nutritional composition includes essentially all organic ingredients.

In an embodiment, the nutritional composition includes no artificial ingredients.

In an embodiment, the nutritional composition includes at least one artificial sweetener.

In an embodiment, the nutritional composition includes high intensity sweeteners.

In an embodiment, the nutritional composition does not include any artificial preservatives.

In an embodiment, the nutritional composition does not include high fructose corn syrup.

In an embodiment, the nutritional composition does not include any contaminants banned under the World Anti-Doping Agency ("WADA") code.

In an embodiment, the nutritional composition includes chocolate.

In an embodiment, the nutritional composition includes cocoa.

In an embodiment, the nutritional composition includes fruit bits.

In yet another embodiment, the nutritional composition includes fruit mixed with cereal.

In an embodiment, the nutritional composition is a snack. Alternatively, the nutritional composition is part of a meal.

In an embodiment, the nutritional composition or product is used for electrolyte replenishment, protein recovery, fast energy, long lasting energy, or combinations thereof.

In yet another embodiment, the nutritional composition or product is used in combination with other nutritional compositions or products as part of a meal. The nutritional composition or product is added to other nutritional compositions or products such as cereal, oatmeal, yogurt, pancakes, waffles, bagels, or bread. In an embodiment, the nutritional composition or product is used like a jam or jelly on cereal, oatmeal, yogurt, pancakes, waffles, bagels, bread and the like.

In an embodiment, the nutritional composition is shelf-stable for at least 12 months at ambient conditions.

In an embodiment, the nutritional composition is provided in the form of a drinkable product.

In yet another embodiment, the nutritional composition is added to a dilutant.

In an embodiment, the nutritional composition includes a source of protein selected from the group consisting of dairy based proteins, plant based proteins, animal based proteins, artificial proteins, engineered proteins, synthesized proteins, or combinations thereof. The dairy based proteins may be selected from the group consisting of casein, caseinates, casein hydrolysate, whey, whey hydrolysates, whey concentrates, whey isolates, milk protein concentrate, milk protein isolate, skim milk powder, non-fat dry milk, or combinations thereof. The plant based proteins may be selected from the group consisting of soy protein, kamut protein, spelt protein, amaranth protein, millet protein, chia protein, sorghum protein, quinoa protein, teff protein, barley protein, legume family proteins, tree nut proteins, pea protein, canola protein, wheat and fractionated wheat proteins, corn proteins, zein proteins, rice proteins, oat proteins, potato proteins, peanut proteins, green pea powder, green bean powder, spirulina, proteins derived from vegetables, beans, buckwheat, lentils, pulses, single cell proteins, or combinations thereof.

In an embodiment, the prebiotic is selected from the group consisting of acacia gum, alpha glucan, arabinogalactans, beta glucan, dextrans, fructooligosaccharides, fucosyllactose, galactooligosaccharides, galactomannans, gentiooligosaccharides, glucooligosaccharides, guar gum, inulin, isomaltooligosaccharides, lactoneotetraose, lactosucrose, lactulose, levan, maltodextrins, milk oligosaccharides, partially hydrolyzed guar gum, pecticoligosaccharides, resistant starches, retrograded starch, sialooligosaccharides, sialyllactose, soyoligosaccharides, sugar alcohols, xylooligosaccharides, their hydrolysates, or combinations thereof.

In an embodiment, the probiotic is selected from the group consisting of probiotics include *Aerococcus*, *Aspergillus*, *Bacteroides, Bifidobacterium, Candida, Clostridium, Debaromyces, Enterococcus, Fusobacterium*, *Lactobacillus*, *Lactococcus*, *Leuconostoc*, *Melissococcus*, *Micrococcus*, *Mucor, Oenococcus, Pediococcus, Penicillium, Peptostrepococcus*, *Pichia, Propionibacterium*, *Pseudocatenulatum, Rhizopus, Saccharomyces*, *Staphylococcus*, *Streptococcus*, *Torulopsis, Weissella,* or combinations thereof.

In an embodiment, the amino acid is selected from the group consisting of alanine, arginine, asparagine, aspartate, citrulline, cysteine, glutamate, glutamine, glycine, histidine, hydroxyproline, hydroxyserine, hydroxytyrosine, hydroxylysine, isoleucine, leucine, lysine, methionine, phenylalanine, proline, serine, taurine, threonine, tryptophan, tyrosine, valine, or combinations thereof.

In an embodiment, the a source of ω-3 fatty acids is selected from the group consisting of fish oil, krill, plant sources containing ω-3 fatty acids, flaxseed, walnut, algae, or combinations thereof. The ω-3 fatty acids may be selected from the group consisting of α-linolenic acid ("ALA"), docosahexaenoic acid ("DHA"), eicosapentaenoic acid ("EPA"), or combinations thereof.

In an embodiment, the phytonutrient is selected from the group consisting of flavanoids, allied phenolic compounds, polyphenolic compounds, terpenoids, alkaloids, sulphur-containing compounds, or combinations thereof. The phytonutrient may be selected from the group consisting of carotenoids, plant sterols, quercetin, curcumin, limonin, or combinations thereof.

In an embodiment, the nucleotide is selected from the group consisting of a subunit of deoxyribonucleic acid, a subunit of ribonucleic acid, polymeric forms of DNA and RNA, or combinations thereof. The nucleotide may be an exogenous nucleotide.

In an embodiment, the antioxidant is selected from the group consisting of astaxanthin, carotenoids, coenzyme Q10 ("CoQlO"), flavonoids, glutathione, Goji (wolfberry), hesperidin, lactowolfberry, lignan, lutein, lycopene, polyphenols, selenium, vitamin A, vitamin C, vitamin E, zeaxanthin, coconut water, or combinations thereof.

In an embodiment, the vitamin is selected from the group consisting of vitamin A, Vitamin B1 (thiamine), Vitamin B2 (riboflavin), Vitamin B3 (niacin or niacinamide), Vitamin B5 (pantothenic acid), Vitamin B6 (pyridoxine, pyridoxal, or pyridoxamine, or pyridoxine hydrochloride), Vitamin B7 (biotin), Vitamin B9 (folic acid), and Vitamin B12 (various cobalamins; commonly cyanocobalamin in vitamin supplements), vitamin C, vitamin D, vitamin E, vitamin K, K1 and K2 (i.e., MK-4, MK-7), folic acid, biotin, or combinations thereof.

In an embodiment, the mineral is selected from the group consisting of boron, calcium, chromium, copper, iodine, iron, magnesium, manganese, molybdenum, nickel, phosphorus, potassium, selenium, silicon, tin, vanadium, zinc, or combinations thereof. Wherein the mineral is sodium, the sodium is provided in an amount ranging from about 100 mg to about 300 mg per serving size, or in an amount that is less than about 200 mg per serving size.

In an embodiment, the potassium is provided through the form of coconut water.

In yet another embodiment, a method for providing nutrition to an athlete is provided. The method includes providing a puree nutritional composition including dextrose, dextrose polymers, crystalline fructose, corn syrup, other grain/nut syrups consisting of rice syrup, agave syrup, palm syrup, or combinations thereof, from 30% to 100% of a puree selected from the group consisting of at least one fruit puree, at least one vegetable puree, at least one fruit puree concentrate, at least one vegetable puree concentrate, or combinations thereof, and a functional ingredient selected from the group consisting of an electrolyte, caffeine, a vitamin, a mineral, a probiotic, a prebiotic, a symbiotic, a phytonutrient, ginseng, a nucleotide, an amino acid, an antioxidant, a source of omega-3 fatty acids, or combinations thereof. The nutritional composition includes 10g to 45g per serving size of a carbohydrate fraction having glucose and fructose in a weight ratio from 0.5: to 5:1. The carbohydrate fraction has glucose and fructose in a weight ratio from about 1:1 to about 5:1. The method further includes administering the puree nutritional composition to the athlete.

The puree nutritional composition may include a functional ingredient selected from the group consisting of an electrolyte, caffeine, a vitamin, a mineral, a probiotic, a prebiotic, a symbiotic, a phytonutrient, ginseng, a nucleotide, an amino acid, an antioxidant, a source of omega-3 fatty acids, or combinations thereof.

Another advantage of the present disclosure is to provide puree nutritional compositions for sports performance.

Yet another advantage of the present disclosure is to provide puree nutritional compositions having specific carbohydrate ratios.

Yet another advantage of the present disclosure is to provide puree nutritional compositions having specific protein ratios.

Still yet another advantage of the present disclosure is to provide puree nutritional compositions including dextrose, dextrose polymers, crystalline fructose, corn syrup, other grain/nut syrups consisting of rice syrup, agave syrup, palm syrup, or combinations thereof.

Still yet another advantage of the present disclosure is to provide puree nutritional compositions including dextrose, dextrose polymers, crystalline fructose, corn syrup, other grain/nut syrups comprising rice syrup, agave syrup, palm syrup, or combinations thereof.

Another advantage of the present disclosure is to provide all natural, puree nutritional compositions including fruit and/or vegetable purees.

Yet another advantage is to provide methods of using puree nutritional compositions for sports performance.

Additional features and advantages are described herein, and will be apparent from the following Detailed Description.

### DETAILED DESCRIPTION

As used herein, the singular forms "a," "an" and "the" include plural referents unless the context clearly dictates otherwise. Thus, for example, reference to "a polypeptide" includes a mixture of two or more polypeptides and the like.

As used herein, "about" is understood to refer to numbers in a range of numerals. Moreover, all numerical ranges herein should be understood to include all integer, whole or fractions, within the range.

As used herein, the phrase "amino acid" is understood to include one or more amino acids. The amino acid can be, for example, alanine, arginine, asparagine, aspartate, citrulline, cysteine, glutamate, glutamine, glycine, histidine, hydroxyproline, hydroxyserine, hydroxytyrosine, hydroxylysine, isoleucine, leucine, lysine, methionine, phenylalanine, proline, serine, taurine, threonine, tryptophan, tyrosine, valine, or combinations thereof.

As used herein, "animal" includes, but is not limited to, mammals, which include but is not limited to, rodents, aquatic mammals, domestic animals such as dogs and cats, farm animals such as sheep, pigs, cows and horses, and humans. Wherein the terms "animal" or "mammal" or their plurals are used, it is contemplated that it also applies to any animals that are capable of the effect exhibited or intended to be exhibited by the context of the passage.

As used herein, the term "antioxidant" is understood to include any one or more of various substances such as beta-carotene (a vitamin A precursor), vitamin C, vitamin E, and selenium that inhibit oxidation or reactions promoted by Reactive Oxygen Species ("ROS") and other radical and non-radical species. Additionally, antioxidants are molecules capable of slowing or preventing the oxidation of other molecules. Non-limiting examples of antioxidants include carotenoids, coenzyme Q10 ("CoQ10"), flavonoids, glutathione, Goji (wolfberry), hesperidin, lactowolfberry, lignan, lutein, lycopene, polyphenols, selenium, vitamin A, vitamin B₁, vitamin B₆, vitamin B₁₂, vitamin C, vitamin D, vitamin E, zeaxanthin, coconut water, or combinations thereof.

As used herein, "carbohydrate(s)" are meant to include Monosaccharides include Trioses (such as: Ketotriose (Dihydroxyacetone); Aldotriose (Glyceraldehyde)); Tetroses which include: Ketotetrose (such as: Erythrulose) and Aldotetroses (such as:Erythrose, Threose); Pentoses which include: Ketopentose (such as:Ribulose, Xylulose) Aldopentose (such as:Ribose, Arabinose, Xylose, Lyxose), Deoxy sugar (such as: Deoxyribose); Hexoses which include: Ketohexose (such as:Psicose, Fructose, Sorbose, Tagatose), Aldohexose (such as: Allose, Altrose, Glucose, Mannose, Gulose, Idose, Galactose, Talose), Deoxy sugar (such as: Fucose, Fuculose, Rhamnose); Heptose (such as: Sedoheptulose); Octose; Nonose (such as: Neuraminic acid); Disaccharides which include: Sucrose; Lactose; Maltose; Trehalose; Turanose; Cellobiose; kojiboise; nigerose; isomaltose; and palatinose; Trisaccharides which include: Melezitose; and Maltotriose; Oligosaccharides that include: corn syrups and maltodextrin; and Polysaccharides that include: glucan (such as dextrin, dextran, beta-glucan), glycogen, mannan, galactan, and starch (such as those from corn, wheat, tapioca, rice, and potato, including Amylose and Amylopectin. The starches can be natural or modified or gelatinized); or combinations thereof. Carbohydrates also include source of sweeteners such as honey, maple syrup, glucose (dextrose), corn syrup, corn syrup solids, high fructose corn syrups, crystalline fructose, juice concentrates, dextrose polymers, malt syrup, rice syrup solids, sorghum syrup, refiner syrup, crystalline fructose, brown or invert sugars, molasses, or other grain/nut syrups consisting of rice syrup, agave syrup, palm syrup, and crystalline juice.

"Dairy" is defined as a food produced from the milk of mammals.

"Dairy substitute" is defined as a milk substitute.

As used herein, "effective amount" is an amount that prevents a deficiency, treats a disease or medical condition in an individual or, more generally, reduces symptoms, manages progression of the diseases or provides a nutritional, physiological, or medical benefit to the individual. A treatment can be patient- or doctor-related.

While the terms "individual" and "patient" are often used herein to refer to a human, the invention is not so limited. Accordingly, the terms "individual" and "patient" refer to any animal, mammal or human having or at risk for a medical condition that can benefit from the treatment.

As used herein, non-limiting examples of sources of omega-3 fatty acids such α-linolenic acid ("ALA"), docosahexaenoic acid ("DHA") and eicosapentaenoic acid ("EPA") include fish oil, krill, poultry, eggs, or other plant or nut sources such as flax seed, walnuts, almonds, algae, modified plants, etc.

As used herein, "food grade micro-organisms" means micro-organisms that are used and generally regarded as safe for use in food.

While the terms "individual" and "patient" are often used herein to refer to a human, the invention is not so limited. Accordingly, the terms "individual" and "patient" refer to any animal, mammal or human having or at risk for a medical condition that can benefit from the treatment.

As used herein, non-limiting examples of sources of ω-3 fatty acids such α-linolenic acid ("ALA"), docosahexaenoic acid ("DHA") and eicosapentaenoic acid ("EPA") include fish oil, krill, poultry, eggs, or other plant or nut sources such as flax seed, walnuts, almonds, algae, modified plants, etc.

The term "microorganism" is meant to include the bacterium, yeast and/or fungi, a cell growth medium with the microorganism, or a cell growth medium in which microorganism was cultivated.

As used herein, the term "minerals" is understood to include boron, calcium, chromium, copper, iodine, iron, magnesium, manganese, molybdenum, nickel, phosphorus, potassium, selenium, silicon, tin, vanadium, zinc, or combinations thereof.

As used herein, a "non-replicating" microorganism means that no viable cells and/or colony forming units can be detected by classical plating methods. Such classical plating methods are summarized in the microbiology book: James Monroe Jay, et al., "Modern food microbiology," 7th edition, Springer Science, New York, N. Y. p. 790 (2005). Typically, the absence of viable cells can be shown as follows: no visible colony on agar plates or no increasing turbidity in liquid growth medium after inoculation with different concentrations of bacterial preparations ('non replicating' samples) and incubation under appropriate conditions (aerobic and/or anaerobic atmosphere for at least 24h). For example, bifidobacteria such as Bifidobacterium longum, Bifidobacterium lactis and Bifidobacterium breve or lactobacilli, such as Lactobacillus paracasei or Lactobacillus rhamnosus, may be rendered non-replicating by heat treatment, in particular low temperature/long time heat treatment.

As used herein, a "nucleotide" is understood to be a subunit of deoxyribonucleic acid ("DNA") or ribonucleic acid ("RNA"). It is an organic compound made up of a nitrogenous base, a phosphate molecule, and a sugar molecule (deoxyribose in DNA and ribose in RNA). Individual nucleotide monomers (single units) are linked together to form polymers, or long chains. Exogenous nucleotides are specifically provided by dietary supplementation. The exogenous nucleotide can be in a monomeric form such as, for example, 5'-Adenosine Monophosphate ("5'-AMP"), 5'-Guanosine Monophosphate ("5'-GMP"), 5'-Cytosine Monophosphate ("5'-CMP"), 5'-Uracil Monophosphate ("5'-UMP"), 5'-Inosine Monophosphate ("5'-IMP"), 5'-Thymine Monophosphate ("5'-TMP"), or combinations thereof. The exogenous nucleotide can also be in a polymeric form such as, for example, an intact RNA. There can be multiple sources of the polymeric form such as, for example, yeast RNA.

"Nut butter" is defined as a spreadable foodstuff made by crushing nuts to form a paste or by a method known in the industry.

"Nutritional compositions," or "nutritional products," as used herein, are understood to include any number of wholesome food ingredients and possibly optional additional ingredients based on a functional need in the product and in full compliance with all applicable regulations. The optional ingredients may include, but are not limited to, conventional food additives, for example one or more, acidulants, additional thickeners, buffers or agents for pH adjustment, chelating agents, colorants, emulsifies, excipient, flavor agent, mineral, osmotic agents, a pharmaceutically acceptable carrier, preservatives, stabilizers, sugar, sweeteners, texturizers, and/or vitamins. The optional ingredients can be added in any suitable amount.

As used herein the term "patient" is understood to include an animal, especially a mammal, and more especially a human that is receiving or intended to receive treatment, as it is herein defined.

As used herein, "phytochemicals" or "phytonutrients" are non-nutritive compounds that are found in many foods. Phytochemicals are functional foods that have health benefits beyond basic nutrition, and are health promoting compounds that come from plant sources. "Phytochemicals" and "Phytonutrients" refers to any chemical produced by a plant that imparts one or more health benefit on the user. Non-limiting examples of phytochemicals and phytonutrients include those that are:
i) phenolic compounds which include monophenols (such as, for example, apiole, carnosol, carvacrol, dillapiole, rosemarinol); flavonoids (polyphenols) including flavonols (such as, for example, quercetin, fingerol, kaempferol, myricetin, rutin, isorhamnetin), flavanones (such as, for example, fesperidin, naringenin, silybin, eriodictyol), flavones (such as, for example, apigenin, tangeritin, luteolin), flavan-3-ols (such as, for example, catechins, (+)-catechin, (+)-gallocatechin, (-)-epicatechin, (-)-epigallocatechin, (-)-epigallocatechin gallate (EGCG), (-)-epicatechin 3-gallate, theaflavin, theaflavin-3-gallate, theaflavin-3'-gallate, theaflavin-3,3'-digallate, thearubigins), anthocyanins (flavonals) and anthocyanidins (such as, for example, pelargonidin, peonidin, cyanidin, delphinidin, malvidin, petunidin), isoflavones (phytoestrogens) (such as, for example, daidzein (formononetin), genistein (biochanin A), glycitein), dihydroflavonols, chalcones, coumestans (phytoestrogens), and Coumestrol; Phenolic acids (such as: Ellagic acid, Gallic acid, Tannic acid, Vanillin, curcumin); hydroxycinnamic acids (such as, for example, caffeic acid, chlorogenic acid, cinnamic acid, ferulic acid, coumarin); lignans (phytoestrogens), silymarin, secoisolariciresinol, pinoresinol and lariciresinol); tyrosol esters (such as, for example, tyrosol, hydroxytyrosol, oleocanthal, oleuropein); stilbenoids (such as, for example, resveratrol, pterostilbene, piceatannol) and punicalagins;
ii) terpenes (isoprenoids) which include carotenoids (tetraterpenoids) including carotenes (such as, for example, alpha-carotene, beta-carotene, gamma-carotene, δ-carotene, lycopene, neurosporene, phytofluene, phytoene), and xanthophylls (such as, for example, canthaxanthin, cryptoxanthin, aeaxanthin, astaxanthin, lutein, rubixanthin); monoterpenes (such as, for example, limonene, perillyl alcohol); saponins; lipids including: phytosterols (such as, for example, campesterol, beta sitosterol, gamma sitosterol, stigmasterol), tocopherols (vitamin E), and ω-3, -6, and -9 fatty acids (such as, for example, gamma-linolenic acid); triterpenoid (such as, for example, oleanolic acid, ursolic acid, betulinic acid, moronic acid);
iii) betalains which include Betacyanins (such as: betanin, isobetanin, probetanin, neobetanin); and betaxanthins (non glycosidic versions) (such as, for example, indicaxanthin, and vulgaxanthin);
iv) organosulfides, which include, for example, dithiolthiones (isothiocyanates) (such as, for example, sulphoraphane); and thiosulphonates (allium compounds) (such as, for example, allyl methyl trisulfide, and diallyl sulfide), indoles, glucosinolates, which include, for example, indole-3-carbinol; sulforaphane; 3,3'-diindolylmethane; sinigrin; allicin; alliin; allyl isothiocyanate; piperine; syn-propanethial-S-oxide;
v) protein inhibitors, which include, for example, protease inhibitors;
vi) other organic acids which include oxalic acid, phytic acid (inositol hexaphosphate); tartaric acid; and anacardic acid; or
vii) combinations thereof.

As used herein, a "prebiotic" is a food substance that selectively promotes the growth of beneficial bacteria or inhibits the growth or mucosal adhesion of pathogenic bacteria in the intestines. They are not inactivated in the stomach and/or upper intestine or absorbed in the gastrointestinal tract of the person ingesting them, but they are fermented by the gastrointestinal microflora and/or by probiotics. Prebiotics are, for example, defined by Glenn R. Gibson and Marcel B. Roberfroid, "Dietary Modulation of the Human Colonic Microbiota: Introducing the Concept of Prebiotics," J. Nutr. 1995 125: 1401-1412. Non-limiting examples of prebiotics include acacia gum, alpha glucan, arabinogalactans, beta glucan, dextrans, fructooligosaccharides, fucosyllactose, galactooligosaccharides, galactomannans, gentiooligosaccharides, glucooligosaccharides, guar gum, inulin, isomaltooligosaccharides, lactoneotetraose, lactosucrose, lactulose, levan, maltodextrins, milk oligosaccharides, partially hydrolyzed guar gum, pecticoligosaccharides, resistant starches, retrograded starch, sialooligosaccharides, sialyllactose, soyoligosaccharides, sugar alcohols, xylooligosaccharides, or their hydrolysates, or combinations thereof.

As used herein, probiotic micro-organisms (hereinafter "probiotics") are food-grade microorganisms (alive, including semi-viable or weakened, and/or non-replicating), metabolites, microbial cell preparations or components of microbial cells that could confer health benefits on the host when administered in adequate amounts, more specifically, that beneficially affect a host by improving its intestinal microbial balance, leading to effects on the health or well-being of the host. See, Salminen S, Ouwehand A. Benno Y. et al., "Probiotics: how should they be defined?," Trends Food Sci. Technol., 1999:10, 107-10. In general, it is believed that these micro-organisms inhibit or influence the growth and/or metabolism of pathogenic bacteria in the intestinal tract. The probiotics may also activate the immune function of the host. For this reason, there have been many different approaches to include probiotics into food products. Non-limiting examples of probiotics include *Aerococcus*, *Aspergillus*, *Bacillus*, *Bacteroides, Bifidobacterium, Candida, Clostridium*, *Debaromyces*, *Enterococcus*, *Fusobacterium*, *Lactobacillus*, *Lactococcas, Leuconostoc*, *Melissococcus, Micrococcus, Mucor, Oenococcus*, *Pediococcus*, *Penicillium*, *Peptostrepococcus*, *Pichia, Propionibacterium*, *Pseudocatenulatum*, *Rhizopus*, *Saccharomyces*, *Staphylococcus*, *Streptococcus*, *Torulopsis*, *Weissella,* or combinations thereof.

The terms "protein," "peptide," "oligopeptides" or "polypeptide," as used herein, are understood to refer to any composition that includes, a single amino acids (monomers), two or more amino acids joined together by a peptide bond (dipeptide, tripeptide, or polypeptide), collagen, precursor, homolog, analog, mimetic, salt, prodrug, metabolite, or fragment thereof or combinations thereof. For the sake of clarity, the use of any of the above terms is interchangeable unless otherwise specified. It will be appreciated that polypeptides (or peptides or proteins or oligopeptides) often contain amino acids other than the 20 amino acids commonly referred to as the 20 naturally occurring amino acids, and that many amino acids, including the terminal amino acids, may be modified in a given polypeptide, either by natural processes such as glycosylation and other post-translational modifications, or by chemical modification techniques which are well known in the art. Among the known modifications which may be present in polypeptides of the present invention include, but are not limited to, acetylation, acylation, ADP-ribosylation, amidation, covalent attachment of a flavanoid or a heme moiety, covalent attachment of a polynucleotide or polynucleotide derivative, covalent attachment of a lipid or lipid derivative, covalent attachment of phosphatidylinositol, crosslinking, cyclization, disulfide bond formation, demethylation, formation of covalent cross-links, formation of cystine, formation of pyroglutamate, formylation, gamma-carboxylation, glycation, glycosylation, glycosylphosphatidyl inositol ("GPI") membrane anchor formation, hydroxylation, iodination, methylation, myristoylation, oxidation, proteolytic processing, phosphorylation, prenylation, racemization, selenoylation, sulfation, transfer-RNA mediated addition of amino acids to polypeptides such as arginylation, and ubiquitination. The term "protein" also includes "artificial proteins" which refers to linear or non-linear polypeptides, consisting of alternating repeats of a peptide, engineered proteins and synthesized proteins.

Non-limiting examples of proteins include dairy based proteins, plant based proteins, animal based proteins, artificial proteins, engineered proteins, and synthesized proteins. Dairy based proteins include, for example, casein, caseinates (e.g., all forms including sodium, calcium, potassium caseinates), casein hydrolysates, whey (e.g., all forms including concentrate, isolate, demineralized), whey hydrolysates, milk protein concentrate, skim milk powder, non-fat dry milk, and milk protein isolate. Plant based proteins include, for example, soy protein (e.g., all forms including concentrate and isolate), pea protein (e.g., all forms including concentrate and isolate), canola protein (e.g., all forms including concentrate and isolate), other plant proteins that commercially are wheat and fractionated wheat proteins, corn and it fractions including zein, rice, oat, potato, peanut, green pea powder, green bean powder, and any proteins derived from beans, lentils, kamut, spelt, amaranth, millet, chia, sorghum, quinoa, teff, barley, legumes, tree nuts, and pulses. Animal based proteins may be selected from the group consisting of beef, poultry, fish, lamb, seafood, or combinations thereof.

As used herein, the phrase "puree composition" is understood to include product, puree nutritional composition, composition, and nutritional composition.

As used herein, the term "puree concentrate" means a concentrate for use in the manufacture of fruit puree containing products is obtained by the physical removal of water from the fruit purée in an amount sufficient to increase the brix level to a value at least 50% greater than the brix value established for reconstituted juice from the same fruit and/or vegetable.

As used herein, the term "shelf-stable" means capable of being stored at room temperature (e.g., about 20 °C to about 25 °C) for long periods (e.g., more than 3 months) without becoming spoiled or rotten. Typical acidified dairy and/or dairy-like products normally need to be stored refrigerated, but the shelf-stable acidified dairy and/or dairy-like products in embodiments of the present disclosure have been processed so that they can be safely stored in a sealed container at room or ambient temperature for a usefully long shelf life without unacceptably changing their taste or texture. The acidified dairy and/or dairy-like product produced can be shelf-stable, for example, for more than 3 months, 6 months, 9 months, 12 months, 18 months, etc.

As used herein, a "synbiotic" is a supplement that contains both a prebiotic and a probiotic that work together to improve the microflora of the intestine.

As used herein, the terms "treatment," "treat" and "to alleviate" include both prophylactic or preventive treatment (that prevent and/or slow the development of a targeted pathologic condition or disorder) and curative, therapeutic or disease-modifying treatment, including therapeutic measures that cure, slow down, lessen symptoms of, and/or halt progression of a diagnosed pathologic condition or disorder; and treatment of patients at risk of contracting a disease or suspected to have contracted a disease, as well as patients who are ill or have been diagnosed as suffering from a disease or medical condition. The term does not necessarily imply that a subject is treated until total recovery. The terms "treatment" and "treat" also refer to the maintenance and/or promotion of health in an individual not suffering from a disease but who may be susceptible to the development of an unhealthy condition, such as nitrogen imbalance or muscle loss. The terms "treatment," "treat" and "to alleviate" are also intended to include the potentiation or otherwise enhancement of one or more primary prophylactic or therapeutic measure. The terms "treatment," "treat" and "to alleviate" are further intended to include the dietary management of a disease or condition or the dietary management for prophylaxis or prevention a disease or condition.

As used herein the term "vitamin" is understood to include any of various fat-soluble or water-soluble organic substances (non-limiting examples include vitamin A, Vitamin B1 (thiamine), Vitamin B2 (riboflavin), Vitamin B3 (niacin or niacinamide), Vitamin B5 (pantothenic acid), Vitamin B6 (pyridoxine, pyridoxal, or pyridoxamine, or pyridoxine hydrochloride), Vitamin B7 (biotin), Vitamin B9 (folic acid), and Vitamin B12 (various cobalamins; commonly cyanocobalamin in vitamin supplements), vitamin C, vitamin D, vitamin E, vitamin K, folic acid and biotin) essential in minute amounts for normal growth and activity of the body and obtained naturally from plant and animal foods or synthetically made, pro-vitamins, derivatives, analogs.

In an embodiment, a source of vitamins or minerals can include at least two sources or forms of a particular nutrient. This represents a mixture of vitamin and mineral sources as found in a mixed diet. Also, a mixture may also be protective in case an individual has difficulty absorbing a specific form, a mixture may increase uptake through use of different transporters (e.g., zinc, selenium), or may offer a specific health benefit. As an example, there are several forms of vitamin E, with the most commonly consumed and researched being tocopherols (alpha, beta, gamma, delta) and, less commonly, tocotrienols (alpha, beta, gamma, delta), which all vary in biological activity. There is a structural difference such that the tocotrienols can more freely move around the cell membrane; several studies report various health benefits related to cholesterol levels, immune health, and reduced risk of cancer development. A mixture of tocopherols and tocotrienols would cover the range of biological activity.

"Yogurt" is defined as a dairy product produced by bacterial fermentation of milk, including a semi-solid food with a tart flavor which may be unflavored, sweetened and/or flavored, as used herein yogurt is intended to include a powder, solid, semisolid, and liquid.

Currently, the performance energy industry delivers energy to athletes primarily via carbohydrates through the use of bars and gels. Typical complaints with respect to performance energy bars include, for example, that the bars are too dense or heavy for consumption before or during exercise, and that the bars have a chalky or bland taste.

Typical challenges with gels include, for example, that they are messy to handle, are not very palatable, and are hard to squeeze from the container pouch into the mouth as a significant portion of the energy product still remains tied up with pouch, which results in a lack of proper energy consumption that the athlete has calculated for his or her specific sports performance. Endurance athletes also complain that the current gels have a sticky mouthfeel due to the incorporation of syrups, are difficult to consume at different due to the lack of a closure on the packaging, require water to wash the gel down, the package is messy to deal with after consumption, the gels contain artificial and/or chemical ingredients, and the gels are not organoleptically pleasing.

Accordingly, the present disclosure provides pureed nutritional compositions that are enhanced with specific carbohydrates including dextrose, dextrose polymers, other grain/nut syrups consisting of rice syrup, agave syrup, palm syrup, or combinations thereof, and can be marketed and consumed as performance sports bar or gel replacement products for endurance and performance sports related functions. Specifically, in an embodiment, the puree nutritional compositions of the present disclosure include natural fruit-based purees including multiple-transportable carbohydrate sources (i.e., glucose: fructose ratios in a range from about 0.5:1 to about 5:1). The all natural enhanced purees deliver energy to the muscles at a targeted and specific glucose:fructose carbohydrate blend that has been found by Applicant to provide for increased absorption in endurance sports, which leads to higher performance from athletes when compared to athletes who have consumed products containing only glucose or fructose. Therefore, the nutritional compositions of the present disclosure are unique not only in the presence of the specific carbohydrate ratios, but also in the delivery of sports performance energy requirements to performance athletes via natural fruit and/or vegetable purees.

Further, the puree nutritional compositions of the present disclosure may be shelf-stable for at least about 12 months at ambient conditions, and may be non-fermented dairy products. In an embodiment, for example, a nutritional composition of the present disclosure is a shelf-stable, thick and creamy mouthfeel, dairy snack that is non-fermented.

In another embodiment, the nutritional compositions of the present disclosure may be essentially all natural and/or organic. In this regard, the nutritional compositions may include essentially all natural ingredients, or contain no artificial colors, sweeteners or flavours. In an embodiment, the nutritional composition includes chocolate. In an embodiment, the nutritional composition includes cocoa. In an embodiment, the nutritional composition includes fruit bits. In yet another embodiment, the nutritional composition includes fruit mixed with cereal. In an alternative embodiment, however, the nutritional compositions include artificial sweeteners, which can help to increase sugar utilization by a performance athlete. In another embodiment, the nutritional compositions do not include any high fructose corn syrup. In yet another embodiment, the nutritional compositions do not include artificial preservatives such as, but not limited to, sodium benzoate or potassium sorbate. Instead, the nutritional compositions may be microbiologically stable throughout the shelf life of the product. In still yet another embodiment, the nutritional compositions may be free from contaminants banned under the World Anti-Doping Agency ("WADA") code.

The nutritional compositions are puree nutritional compositions that include at least one puree selected from the group consisting of at least one fruit puree, at least one vegetable puree, at least one fruit puree concentrate, at least one vegetable puree concentrate, or combinations thereof. The puree may be provided in the nutritional compositions in amounts ranging from about 30% to about 100% by weight of the nutritional composition, or from about 40% to about 90%, or from about 50% to about 70%, or from about 60% to about 70%, or about 65% by weight of the nutritional composition. Alternatively, the nutritional compositions may include whole fruit and/or vegetables.

The pureed fruit may include, but is not limited to, apple, orange, pear, peach, strawberry, banana, cherry, pineapple, kiwi, grape, blueberry, raspberry, mango, guava, cranberry, blackberry or a combination thereof. The pureed vegetable may include, but is not limited to, artichoke, arugula, asparagus, avocado, beans, beet greens, broccoli, brussels sprout, cabbage, carrot, celery, chicory, collard greens, cucumber, eggplant, endive, kale, lettuce, onion, pea, peppers, potato, pumpkin, radicchio, spinach, squash, sweet potato, tomato, turnip greens, watercress, yam, zucchini, or combinations thereof. The fruits and/or vegetables may be essentially all natural and/or all organic.

Regarding the glucogenic:fructogenic ratios of the present disclosure, it has been surprisingly found that a glucogenic:fructogenic carbohydrate ratio between about 1:1 and 5:1 is optimum. When the ratio is within the cited range, it has been found that the availability of the energy (from carbohydrates) to the muscles is optimized. The glucidic sources of energy are quickly absorbed though the digestive tract and transported to the muscles. It is speculated, without being bound by the theory, that such a ratio provides for an optimum utilization of the glucose (respectively fructose) receptors and transporters. With both pathways (glucose and fructose) being utilized optimally, a beneficial effect is observed in the availability of the sources of energy to the muscles. Also, it is speculated that the energy required to absorb and transport the molecules to the muscles is comparatively lowered.

The glucogenic:fructogenic carbohydrate ratio is between about 1:1 and about 5:1. In other embodiments, the glucogenic:fructogenic carbohydrate ratio is between about 2:1 and 4:1, or about 1:1, or 2:1, or 3:1, or 4:1, or 5:1, or the like. All references to percentages are percentages by weight (of dry matter) unless otherwise stated.

The glucogenic:fructogenic carbohydrate ratio is the ratio obtained by dividing total number of glucose molecules over the total number of fructose molecules in a theoretical complete hydrolysis of all the available carbohydrates present in the nutritional composition. For example, for a mix comprising 80% pure glucose and 20% pure fructose, the ratio of glucose/fructose = 80/20 = 4. For a 100% high fructose corn syrup (high fructose corn syrup contains 45% glucose and 55% fructose), the ratio of glucose/fructose = 45/55 = 0.8. For a 100% saccharose (= sucrose = 50% fructogenic carbohydrate 50% glucogenic carbohydrate), the ratio of glucose/fructose = 50/50 = 1. For a 50 % saccharose and 50 % corn syrup [100% glucogenic carbohydrate], the ratio of glucose/fructose = (50 + 100) / 50 = 3.

The determination of the glucose and fructose carbohydrate content can be performed by any suitable conventional methods. For example, the total sugar can be determined by acid hydrolysis followed by a sugar profile analysis using chromatography.

The glucose and/or fructose may be provided in the form of fructogenic and/or glucogenic carbohydrates. In this specification, fructogenic carbohydrates are carbohydrates that upon theoretical total hydrolysis release at least one fructose molecule. Glucogenic carbohydrates are available carbohydrates that upon theoretical total hydrolysis release at least one glucose molecule. Consequently, a carbohydrate can be both, glucogenic and fructogenic (e.g., saccharose).

The carbohydrates of the present nutritional compositions may comprise or consist of monosaccharides, such as glucose or fructose as basic carbohydrate units. The monosaccharides may represent a part of disaccharides, such as sucrose, lactose, maltose or cellobiose. The monosaccharides such as glucose or fructose may also represent a part of oligosaccharides or polysaccharides. Preferred carbohydrate sources for the present invention are maltodextrins and/or dextrose.

Applicant believes that an intake of even 90 grams of carbohydrate ("CHO") per hour in the form of a liquid nutritional composition, as well as 30-60 g CHO/h as recommended by the American College of Sports Medicine, is well tolerable if ingested as a carbohydrate mixture comprising glucose and fructose in a ratio in the range of about 0.5:1 to about 5:1, 1:1 to sbout 5:1, or more specifically 2:1. Additionally, the gastric tolerance of a liquid nutritional composition delivering a mixture of glucose and fructose at relatively high rates during a real life situation of either running or cycling outdoors.

Applicant further believes that the ingestion of 90 grams/h of the above carbohydrate mixture will allow to keep the distress of the GI-tract of athletes minimal, and at about a rate of 15% of subjects. Furthermore, it is believed that the minimal GI distress will not increase as compared with an intake of 60 grams of a carbohydrate mixture comprising glucose and fructose in a ratio in the range of about 0.5:1 to about 5:1, 1:1 to sbout 5:1, or more specifically 2:1 per hour.

Consequently, one embodiment of the present disclosure is a nutritional composition comprising a carbohydrate fraction comprising glucose and fructose in a ratio in a range from about 0.5:1 to about 5:1. The nutritional compositions of the present disclosure are pureed food products that include at least one carbohydrate source, and preferably a multiple carbohydrate source such as the combination of glucose and fructose, or maltodextrin and fructose.

The carbohydrate fraction of the nutritional compositions may comprise at least 30% glucose and fructose, preferably at least 50% glucose and fructose more preferably at least 85% glucose and fructose. In one embodiment of the present disclosure the carbohydrate fraction of the nutritional compositions provides at least 50%, preferably at least 70% of the energy of the nutritional composition.

The carbohydrate fraction per serving is present in amounts to provide the nutritional compositions with carbohydrates in an amount ranging from about 10 g to about 45 g, or from about 12.5 g to about 40 g, or from about 15 g to about 35 g, or from about 20 g to about 30 g, or about 25 g carbohydrates.

The nutritional compositions of the present disclosure may optionally include a protein fraction and/or a fat fraction. The presence of proteins and/or fats in the nutritional compositions of the present disclosure has the advantage that this way it is possible to provide the athlete with a more complete nutrition during performance. Furthermore, the presence of proteins allows producing a nutritional composition with a modified taste.

In an embodiment, the protein fraction may be present in amounts to provide the nutritional compositions with protein in an amount ranging from about 5 g to about 35 g. In an embodiment, the protein fraction may be present in amounts to provide the nutritional compositions with protein in an amount ranging from about 10 g to about 30 g. In an embodiment, the protein fraction may be present in amounts to provide the nutritional compositions with protein in an amount ranging from about 15 g to about 25 g. In an embodiment, the protein fraction may be present in amounts to provide the nutritional compositions with protein in an amount about 20 g protein per serving size.

As protein source, any suitable dietary protein may be used, for example animal proteins (such as milk proteins, meat proteins and egg proteins); plant proteins (such as soy protein, wheat protein, rice protein, and pea protein); mixtures of free amino acids; or combinations thereof. In an embodiment, milk proteins such as casein and whey, and soy proteins are included in the nutritional compositions.

The proteins may be intact or hydrolyzed or a mixture of intact and hydrolyzed proteins. It may be desirable to supply partially hydrolyzed proteins (degree of hydrolysis between 2 and 20%), for example for athletes believed to be at risk of developing cows' milk allergy. Additionally, in generally at least partially hydrolyzed proteins are easier and faster to metabolize by the body. This is in particular true for amino acids. Consequently, it is further preferred if the nutritional compositions of the present disclosure contain single amino acids. In an embodiment, however, essential amino acids are included in the nutritional compositions. In one embodiment the nutritional compositions of the present disclosure contains amino acids such as L-leucine, L-valine and/or L-isoleucine.

If the nutritional composition includes a fat source, the fat source has the advantage that, for example, an improved mouth feel can be achieved. Any fat source is suitable. For example, animal or plant fats may be used. To increase the nutritional value, sources of omega-3-unsaturated and omega-3-unsaturated fatty acids may be comprised by the fat source. The fat source may also contain long chain fatty acids and/or medium chain fatty acids. For example, milk fat, canola oil, almond butter, peanut butter, corn oil and/or high-oleic acid sunflower oil may be used.

The nutritional compositions may also contain minerals and micronutrients such as trace elements and vitamins in accordance with the recommendations of Government bodies such as the United States Recommended Daily Allowances ("USRDA").

The nutritional compositions may contain vitamins, such as Vitamin C, Vitamin E, Vitamin B 12, Niacin, Vitamin B6, folic acid, biotin, panthotenic acid, Vitamin B2 and/or Vitamin B6, preferably in amounts that correspond to at least 10% of the recommended daily dose. The presence of vitamins may contribute to the effectiveness of the nutritional composition and may further protect the athlete. For example, the presence of vitamin C will help to protect against catching a common cold.

The nutritional compositions may also include electrolytes and/or minerals, such as sodium, potassium, calcium, iron, magnesium or zinc. These nutritional compounds may be helpful to replenish the body with compounds that the person is constantly loosing due to the generation of sweat during exercise. They may also help to prevent the generation of post-exercise sore muscles.

The nutritional compositions of the present disclosure may further contain one or more functional compounds selected from the group consisting of aroma compounds, fiber, caffeine, conservatives, guarana, acidifying agents, binding agents, gel building material, water, fruit juice, fruits, flavoring and coloring agents. These agents may improve the nutritional compositions of the present disclosure with respect to many properties, such as taste, consistency, color, and stability during storage, digestibility, and many more that are known to those of skill in the art.

In an embodiment wherein the nutritional compositions include fiber, or a source of fiber, the fiber is present in the nutritional compositions in an amount that is less than about 3 g per serving size. It is known in the art that fiber has natural laxative properties, which is, for obvious reasons, undesirable to athletes who are partaking in long duration performance sports. Indeed, known performance compositions that include larger amounts of fibers tend to stimulate the athletes need to use the restroom, which inherently detracts from the athletes performance.

To be easily consumable, for example, during a competition or in between competitions, the serving size of the nutritional compositions is preferably relatively small. The nutritional compositions may have a serving size from about 28.35 g to about 141.75 g (about 1 to about 5 ounces), or from about 56.70 g to about 113.40 g (about 2 to about 4 ounces), or about 85.05 g (about 3 ounces). In an embodiment, the nutritional compositions have a serving size of about 59.15 g or about 118.29 g (about 2 or about 4 fluid ounces).

The nutritional compositions of the present disclosure may be used, for example, as a food product, as a food additive or as a nutraceutical. In an embodiment of the present disclosure the nutritional compositions of the present disclosure are used for the preparation of a food product or as a food product to provide an increased performance, in particular endurance performance.

The formulation of nutritional compositions of the present disclosure may also be used to provide an increased carbohydrate delivery without any increased gastrointestinal disorders and/or to treat or prevent problems with the gastrointestinal tract. Indeed, the combination of glucose and fructose in the nutritional compositions of the present disclosure allows the high carbohydrate content of the nutritional compositions is well tolerated by the body, so that problems of the gastrointestinal tract that one would normally expect after a high level of carbohydrate intake during exercise are at least partially avoided. Also, the gastrointestinal tolerance for carbohydrates, in particular the glucose/fructose mixture of the present disclosure will be increased.

The problems with the gastrointestinal tract as mentioned above are not particularly limited but are preferably selected from the group consisting of upper abdominal problems such as reflux, heartburn, bloating, upper abdominal cramps, vomiting, nausea; lower abdominal problems such as intestinal cramps, flatulence, urge to defecate, left abdominal pain, right abdominal pain, loose stool, diarrhea; or systemic problems such as dizziness, headache, muscle cramp or urge to urinate.

For exercise in general, but in particular for competitive exercise it is essential that the body has blood sugar available for the muscles to burn at all times. In particular at the end of a race it must be avoided, or the athlete will run out of energy. The subject matter of the present disclosure is well suited to prevent this. According to one embodiment of the present disclosure, the nutritional compositions of the present disclosure can be used to allow for an enhanced blood sugar maintenance late in exercise.

Further, the present nutritional compositions may be used to provide faster energy delivery, in particular to working muscles, and/or to provide more sustained energy to muscles. Both effects will contribute to an optimal performance of an athlete. Applicant has found that the above listed uses can be successfully carried out with any amounts of carbohydrates comprising glucose and fructose in a ratio from about 0.5:1 to about 5:1. In a further embodiment, the composition has a carbohydrate fraction having glucose and fructose in a weight ratio from about 1:1 to about 5:1. However, Applicant believes that best results may be obtained, when the nutritional compositions are used in an amount that corresponds to an ingestion of compositions having a glucogenic:fructogenic ratio of about 2:1.

In an embodiment, the present nutritional compositions may include any amino acid. Non-limiting examples of amino acids include isoleucine, alanine, leucine, asparagine, lysine, aspartate, methionine, cysteine, phenylalanine, glutamate, threonine, glutamine, tryptophan, glycine, valine, proline, serine, tyrosine, arginine, citrulline, histidine, or combinations thereof. In an embodiment, the amino acid is beta-alanine. The present nutritional compositions and products may also include a biological source of an amino acid. For example, the nutritional compositions may include a biological source of beta-alanine including, for example, carnosine, anserine, balanine, and salts and chemical derivatives thereof. The amino acids or biological sources thereof may be provided in any form including, for example, powder, crystal, etc.

The present nutritional compositions may also include beneficial or functional ingredients. For example, the food products may include a source of protein including, but not limited to animal protein (such as meat protein or egg protein), dairy protein (such as casein, caseinates (e.g., all forms including sodium, calcium, potassium caseinates), casein hydrolysates, whey (e.g., all forms including concentrate, isolate, demineralized), whey hydrolysates, milk protein concentrate, skim milk powder, non-fat dry milk, and milk protein isolate), plant protein (such as soy protein, wheat protein, rice protein, and pea protein), or combinations thereof. In an embodiment, the protein source is selected from the group consisting of calcium caseinate, whey protein, soy protein isolates, milk proteins, skim milk powder, non-fat dry milk, or combinations thereof. The protein may be in powder format.

In an embodiment, the nutritional compositions include one or more prebiotics. The prebiotics may be selected from the group consisting of acacia gum, alpha glucan, arabinogalactans, beta glucan, dextrans, fructooligosaccharides, galactooligosaccharides, galactomannans, gentiooligosaccharides, glucooligosaccharides, guar gum, inulin, isomaltooligosaccharides, lactosucrose, lactulose, levan, maltodextrins, partially hydrolyzed guar gum, pecticoligosaccharides, retrograded starch, soyoligosaccharides, sugar alcohols, xylooligosaccharides, or combinations thereof.

In an embodiment, the nutritional compositions include one or more probiotics selected from the group consisting of *Aerococcus, Aspergillus, Bacteroides, Bifidobacterium, Candida, Clostridium*, *Debaromyces*, *Enterococcus*, *Fusobacterium*, *Lactobacillus*, *Lactococcus*, *Leuconostoc*, *Melissococcus*, *Micrococcus, Mucor*, *Oenococcus*, *Pediococcus, Penicillium*, *Peptostrepococcus*, *Pichia, Propionibacterium*, *Pseudocatenulatum*, *Rhizopus*, *Saccharomyces*, *Staphylococcus*, *Streptococcus*, *Torulopsis*, *Weissella,* or combinations thereof.

The nutritional compositions may also include a source of fiber, fiber or a blend of different types of fiber. The fiber blend may contain a mixture of soluble and insoluble fibers. Soluble fibers may include, for example, fructooligosaccharides, acacia gum, inulin, etc. Insoluble fibers may include, for example, pea outer fiber. In an embodiment, however, the fiber is present in the nutritional compositions in an amount that is less than about 3 g per serving.

In an embodiment, the nutritional compositions include a source of carbohydrates, as discussed above. Any suitable carbohydrate may be used in the present nutritional compositions including, but not limited to, sucrose, lactose, glucose, fructose, corn syrup solids, maltodextrin, modified starch, amylose starch, tapioca starch, corn starch, or combinations thereof. In an embodiment, the nutritional compositions include maltodextrin to boost the amount of total carbohydrates up to about 20 g, up to about 30 g, up to about 40 g or up to about 50 g per serving size. The use of maltodextrin allows for the addition of carbohydrates without adding to the sweetness of the nutritional compositions. This may be important as athletes tend to become sensitive to sweetness after about 30-60 minutes of athletic performance.

In an embodiment, the nutritional compositions include a source of fat. The source of fat may include any suitable fat or fat mixture. For example, the fat may include, but is not limited to, vegetable fat (such as olive oil, corn oil, sunflower oil, rapeseed oil, grape seed oil, hazelnut oil, soy oil, palm oil, coconut oil, canola oil, lecithins, and the like) and animal fats (such as milk fat).

In an embodiment, the nutritional compositions include one or more synbiotics, phytonutrients and/or antioxidants. The antioxidants may be selected from the group consisting of carotenoids, coenzyme Q10 ("CoQlO"), flavonoids, glutathione, Goji (Wolfberry), hesperidin, Lactowolfberry, lignan, lutein, lycopene, polyphenols, selenium, vitamin A, vitamin B1, vitamin B6, vitamin B12, vitamin C, vitamin D, vitamin E, zeaxanthin, coconut water, or combinations thereof.

In an embodiment, the nutritional compositions include one or more vitamins and minerals. Non-limiting examples of vitamins include Vitamins A, B-complex (such as B-1, B-2, B-6 and B-12), C, D, E and K, niacin and acid vitamins such as pantothenic acid and folic acid, biotin, or combinations thereof. Non-limiting examples of minerals include calcium, iron, zinc, magnesium, iodine, copper, phosphorus, manganese, potassium, chromium, molybdenum, selenium, nickel, tin, silicon, vanadium, boron, or combinations thereof. In an embodiment, the nutritional compositions include sodium in an amount that is greater than about 100 mg per serving size, or greater than about 150 mg per serving size, or greater than about 200 mg per serving size, or greater than about 250 mg per serving size. In an embodiment, the nutritional compositions include from about 100 mg to about 300 mg sodium per serving size. The amount of sodium may be used functionally as an electrolyte to help prevent cramping or exhaustion of the athlete during the performance.

In an embodiment, the nutritional compositions include at least one source of ω-3 fatty acids. The sources may be, for example, fish oil, krill, plant sources of ω-3, flaxseed, walnut, and algae. Examples of ω-3 fatty acids include, for example, α-linolenic acid ("ALA"), docosahexaenoic acid ("DHA"), eicosapentaenoic acid ("EPA"), or combinations thereof.

In another embodiment, the food products may include at least one nucleotide. The nucleotide may be selected from the group consisting of a subunit of deoxyribonucleic acid, a subunit of ribonucleic acid, polymeric forms of DNA and RNA, or combinations thereof. The nucleotide may be an exogenous nucleotide.

Other optional ingredients can be added to make the food products sufficiently palatable. For example, the food products of the present disclosure can optionally include conventional food additives, such as any of, acidulants, additional thickeners, buffers or agents for pH adjustment, chelating agents, colorants, emulsifiers, excipients, flavor agents, minerals, osmotic agents, pharmaceutically acceptable carriers, preservatives, stabilizers, sugars, sweeteners, texturizers, or combinations thereof. The optional ingredients can be added in any suitable amount. In an embodiment, a combination of stabilizers is present in the nutritional compositions in order to create a thick, creamy mouthfeel dairy snack that is non-fermented.

The nutritional compositions of the present disclosure provide a convenient, unique, portable and easy-to-consume way to deliver adequate nutritional requirements to performance athletes. In addition, the nutritional compositions are customizable to deliver the exact nutrition and/or carbohydrate load required by each specific consumer.

Additionally, the nutritional compositions of the present disclosure provide an improved taste with the same or better performance benefits when compared to known nutritional compositions because the present nutritional compositions have natural fruit and/or vegetable flavors. Further, the consistency of the puree nutritional compositions allows the nutritional compositions to be provided in smaller packages that are easier to entirely empty when the nutritional compositions are consumed. In this regard, the consumer can more precisely calculate the amount of carbohydrates consumed to ensure proper nutritional intake during performance activities.

While the nutritional compositions of the present disclosure are disclosed as being useful for consumption by athletes, it is, however, clear, that the nutritional compositions of the present disclosure can be used by anybody in need of carbohydrate supply. For example, the nutritional compositions of the present disclosure can be very well used as transportable food for people, who do not wish to carry too heavy provisions, for example during long term trips. The nutritional compositions of the present disclosure may equally well be used by people to provide the body with carbohydrates for example before or during an examination in school or at the university.

By way of example and not limitation, the following examples are illustrative of various embodiments of the present disclosure. The formulations and processes below are provided for exemplification only, and they can be modified by the skilled artisan to the necessary extent, depending on the special features that are desired.

### EXAMPLES

### Example 1 - Strawberry Apple Mango Composition

**TABLE 1**

| **Item** | **Quantity (g/100g)** |
|---|---|
| Fructose | 7.4 |
| Glucose | 2.5 |
| Sucrose | 1.6 |
| Lactose | 0 |
| Maltose | 0 |
| Galactose | 0 |
| Fiber | 1.5 |
| Carbohydrates Total | 26.1 |
| | |
| Total Fructose | 8.2 |
| Total Glucogenic | 16.4 |

As shown in Table 1 above, an example nutritional composition of the present disclosure includes a glucogenic:fructogenic ratio of about 2:1. In addition to the carbohydrates listed above, the example nutritional composition further includes apples, mango puree, strawberry puree, ascorbic acid, water, and alpha tocopheryl acetate.

### Example 2 - Banana Blueberry Composition

**TABLE 2**

| **Item** | **Quantity (g/100g)** |
|---|---|
| Fructose | 4.7 |
| Glucose | 4.2 |
| Sucrose | 8.2 |
| Lactose | 0 |
| Maltose | 0 |
| Galactose | 0 |
| Fiber | 1.09 |
| Carbohydrates Total | 27.5 |
| Total Fructose | 8.8 |
| Total Glucogenic | 17.61 |

As shown in Table 2 above, another example nutritional composition of the present disclosure provides a glucogenic:fructogenic ratio of about 2:1. In addition to the carbohydrates listed above, the example nutritional composition further includes banana puree, blueberry puree, citric acid, ascorbic acid, and alpha tocopheryl acetate.

## Claims

1. A puree nutritional composition comprising:
a puree selected from the group consisting of at least one fruit puree, at least one vegetable puree, at least one fruit puree concentrate, at least one vegetable puree concentrate, and combinations thereof;
at least one nut butter; and
an ingredient selected from the group consisting of dextrose, dextrose polymers, other grain/nut syrups comprising rice syrup, agave syrup, palm syrup, and combinations thereof,
wherein the nutritional composition includes a carbohydrate fraction comprising glucose and fructose in a weight ratio from 0.5:1 to 5:1,
wherein the puree is present in the nutritional composition in an amount ranging from 30% to about 100%, and
wherein the carbohydrate fraction is present in an amount ranging from 10 g to 45 g per serving size of the nutritional composition, wherein the serving size is from 28.35 g to 141.75 g.

2. The nutritional composition of claim 1,
wherein the nutritional composition includes a carbohydrate fraction comprising glucose and fructose in a weight ratio from 2:1 to 4:1, or
wherein the puree is present in the nutritional composition in an amount ranging from 60% to 90%, or
wherein the carbohydrate fraction is present in an amount ranging from 15 g to 35 g per serving size of the nutritional composition, wherein the serving size is from 28.35 g to 141.75 g.

3. The nutritional composition of Claim 1 or 2, wherein the at least one nut butter is selected from the group consisting of peanut butter, almond butter, sunflower seed butter, cashew butter, hazelnut butter, macadamia nut butter, walnut butter, pecan butter, pistachio butter, pumpkin seed butter, sesame seed butter, soybean butter, and combinations thereof.

4. The nutritional composition of Claim 1 or 2, wherein the at least one nut butter comprises peanut butter.

5. The nutritional composition of Claim 1 or 2, wherein the fruit puree is selected from the group consisting of apple, orange, pear, peach, strawberry, banana, cherry, pineapple, kiwi, grape, blueberry, raspberry, mango, guava, cranberry, blackberry, tropical fruits, Amazonian fruits, and combinations thereof.

6. The nutritional composition of Claim 1 or 2, wherein the vegetable puree is selected from the group consisting of artichoke, arugula, asparagus, avocado, beans, beet greens, broccoli, brussels sprout, cabbage, carrot, celery, chicory, collard greens, cucumber, eggplant, endive, kale, lettuce, onion, pea, peppers, potato, pumpkin, radicchio, spinach, squash, sweet potato, swiss chard, tomato, turnip greens, watercress, yam, zucchini, and combinations thereof.

7. The nutritional composition of Claim 1 or 2, wherein the carbohydrate fraction further comprises maltodextrin.

8. The nutritional composition of Claim 1 or 2, wherein the carbohydrate fraction further comprises at least one juice concentrate.

9. The nutritional composition of Claim 1 or 2, further comprising at least one protein fraction, wherein the protein fraction is present in an amount ranging from 5 g to 35g per serving size of the nutritional composition.

10. The nutritional composition of Claim 1 or 2, further comprising at least one compound selected from the group consisting of aroma compounds, fiber, conservatives, guarana, caffeine, nitrates, acidifying agents, binding agents, gel building material, a flavoring, a coloring, and combinations thereof.

11. The nutritional composition of Claim 1 or 2, further comprising sodium in an amount ranging from 100 mg to 300 mg per serving size of the nutritional composition.

12. The nutritional composition of Claim 1 or 2, further comprising at least one of:
a) an oat selected from the group consisting of cooked oats, oatmeal, and combinations thereof;
b) at least one grain selected from the group consisting of wheat, oat, rice, barley, amaranth, faro, teff, quinoa, spelt, kamut, buckwheat, rye, millet, wheat bran, psyllium, and combinations thereof; and
c) combinations thereof.

13. The nutritional composition of Claim 1 or 2, further comprising at least one functional spice selected from the group consisting of cinnamon, curcumin, turmeric, nutmeg, cayenne, oregano, rosemary, ginger, mint, basil, garlic, and combinations thereof.

14. The nutritional composition of Claim 1 or 2, further comprising at least one dairy or at least one dairy substitute or at least one dairy and at least one dairy substitute.

15. The nutritional composition of Claim 1 or 2, further comprising a sweetener selected from the group consisting of at least one artificial sweetener, at least one high intensity sweetener, and combinations thereof.

16. The nutritional composition of Claim 1 or 2, further comprising at least one functional ingredient selected from the group consisting of an electrolyte, a vitamin, a mineral, a probiotic, a prebiotic, a symbiotic, a phytonutrient, ginseng, a nucleotide, an amino acid, an antioxidant, a source of omega-3 fatty acids, and combinations thereof.

17. The nutritional composition of Claim 1 or 2, further comprising a source of protein selected from the group consisting of dairy based proteins, plant based proteins, animal based proteins, artificial proteins, engineered proteins, synthesized proteins, and combinations thereof.

18. The nutritional composition of Claim 1 or 2, wherein essentially all ingredients of the nutritional composition are natural ingredients.

19. The nutritional composition of Claim 1 or 2, wherein essentially all ingredients of the nutritional composition are organic ingredients.

20. The nutritional composition of Claim 1 or 2, wherein the nutritional composition is a one-portion package tailored for specific needs due to the sport or activity.

21. The nutritional composition of Claim 20, wherein the sport or activity is selected from the group consisting of running, cycling, endurance training, muscle building, marathon, triathlon, Ironman, and combinations thereof.

22. The nutritional composition of Claim 20, wherein the nutritional composition further comprises nitrates in a composition formulated for pre-exercise use.

23. The nutritional composition of Claim 20, further comprising caffeine in a composition formulated for during-exercise use, in or near end-exercise use, or during-exercise use, and in and near end-exercise use.

24. The nutritional composition of Claim 20, further comprising protein in a composition formulated for post-exercise use.

25. The nutritional composition of Claim 1 or 2, wherein the nutritional composition is provided in a multi-chamber package comprising two or more chambers.

26. The nutritional composition of Claim 25, wherein the multi-chamber package comprises two or more portions.

27. The nutritional composition of Claim 25, wherein the multi-chamber package comprises one portion divided into two or more chambers.

28. The nutritional composition of Claim 1 or 2, wherein the nutritional composition is provided in a multi-chamber package comprising a formulation selected from the group consisting of at least one pre-exercise formulation, at least one during-exercise formulation, at least one near end-exercise formulation, at least one post-exercise formulation, and combinations thereof.

29. The nutritional composition of Claim 28, wherein the nutritional composition is provided in a multi-chamber package tailored to a specific sport or activity.

30. The nutritional composition of Claim 1 or 2, wherein the nutritional composition is consumed in a frozen or near-frozen form.

31. The nutritional composition of Claim 1 or 2, wherein the nutritional composition includes a thinner selected from the group consisting of fruit juice, vegetable juice, coconut water, water, milk, and combinations thereof, wherein the thinner is used as a dilutant for the purposes of hydration.

32. A method for providing nutrition to an individual participating in a sport or activity, the method comprising:
administering to the individual a nutritional composition comprising
a puree selected from the group consisting of at least one fruit puree, at least one vegetable puree, at least one fruit puree concentrate, at least one vegetable puree concentrate, and combinations thereof;
at least one nut butter; and
an ingredient selected from the group consisting of dextrose, dextrose polymers, other grain/nut syrups comprising rice syrup, agave syrup, palm syrup, and combinations thereof,
wherein the nutritional composition includes a carbohydrate fraction comprising glucose and fructose in a weight ratio from 0.5:1 to 5:1,
wherein the puree is present in the nutritional composition in an amount ranging from 30% to about 100%, and
wherein the carbohydrate fraction is present in an amount ranging from 10g to 45 g per serving size of the nutritional composition.

## Patentansprüche

1. Püree-Nahrungszusammensetzung aufweisend:
ein Püree, ausgewählt aus der Gruppe aufweisend mindestens ein Fruchtpüree, mindestens ein Gemüsepüree, mindestens ein Fruchtpüreekon-zentrat, mindestens ein Gemüsepüreekonzentrat, und Kombinationen daraus;
mindestens eine Nussbutter; und
eine Zutat, ausgewählt aus der Gruppe aufweisend Dextrose, Dextrosepolymere, weitere Getreide-/Nuss-Sirups aufweisend Reissirup, Agavensirup, Palmsirup und Kombinationen daraus,
wobei die Nahrungszusammensetzung eine Kohlenhydratfraktion aufweisend Glucose und Fructose in einem Gewichtsverhältnis von 0,5:1 bis 5:1 umfasst,
wobei das Püree in der Nahrungszusammensetzung in einer Menge von 30% bis etwa 100% vorhanden ist, und
wobei die Kohlenhydratfraktion in einer Menge von 10 g bis 45 g pro Portion der Nahrungszusammensetzung vorhanden ist, wobei die Portion von 28,35 g bis 141,75 g reicht.

2. Nahrungszusammensetzung nach Anspruch 1,
wobei die Nahrungszusammensetzung eine Kohlenhydratfraktion aufweisend Glucose und Fructose in einem Gewichtsverhältnis von 2:1 bis 4:1 umfasst,
oder
wobei das Püree in der Nahrungszusammensetzung in einer Menge von 60% bis 90% vorhanden ist, oder
wobei die Kohlenhydratfraktion in einer Menge von 15 g bis 35 g pro Portion der Nahrungszusammensetzung vorhanden ist, wobei die Portion von 28,35 g bis 141,75 g reicht.

3. Nahrungszusammensetzung nach Anspruch 1 oder 2, wobei die mindestens eine Nussbutter aus der Gruppe ausgewählt ist, aufweisend Erdnussbutter, Mandelbutter, Sonnenblumenkernbutter, Cashewbutter, Haselnussbutter, Macadamianussbutter, Walnussbutter, Pecanbutter, Pistazienbutter, Kürbiskernbutter, Sesamsaatbutter, Sojabohnenbutter und Kombinationen daraus.

4. Nahrungszusammensetzung nach Anspruch 1 oder 2, wobei die mindestens eine Nussbutter Erdnussbutter aufweist.

5. Nahrungszusammensetzung nach Anspruch 1 oder 2, wobei das Fruchtpüree aus der Gruppe ausgewählt ist aufweisend Äpfel, Orangen, Birnen, Pfirsiche, Erdbeeren, Bananen, Kirschen, Ananas, Kiwi, Trauben, Heidelbeeren, Himbeeren, Mango, Guaven, Cranberries, Brombeeren, Südfrüchte, Früchte des Amazonasgebietes und Kombinationen daraus.

6. Nahrungszusammensetzung nach Anspruch 1 oder 2, wobei das Gemüsepüree aus der Gruppe ausgewählt ist aufweisend Artischocken, Rucola, Spargel, Avocado, Bohnen, Rote Beete, Broccoli, Rosenkohl, Weißkohl, Karotten, Sellerie, Chicoree, Kohlblätter, Gurke, Aubergine, Endivien, Grünkohl, Kopfsalat, Zwiebeln, Erbsen, Paprikaschoten, Kartoffeln, Kürbis, Radicchio, Spinat, Speisekürbis, Süßkartoffel, Mangold, Tomaten, Rübstiel, Brunnenkresse, Yamswurzel, Zucchini und Kombinationen daraus.

7. Nahrungszusammensetzung nach Anspruch 1 oder 2, wobei die Kohlenhydratfraktion weiterhin Maltodextrin aufweist.

8. Nahrungszusammensetzung nach Anspruch 1 oder 2, wobei die Kohlenhydratfraktion weiterhin mindestens ein Saftkonzentrat aufweist.

9. Nahrungszusammensetzung nach Anspruch 1 oder 2, weiterhin aufweisend mindestens eine Proteinfraktion, wobei die Proteinfraktion in einer Menge von 5 g bis 35 g pro Portion der Nahrungszusammensetzung vorhanden ist.

10. Nahrungszusammensetzung nach Anspruch 1 oder 2, weiterhin aufweisend mindestens eine Verbindung, ausgewählt aus der Gruppe aufweisend Aromaverbindungen, Ballaststoffe, Konservierungsstoffe, Guarana, Koffein, Nitrate, Säuerungsmittel, Bindemittel, Gelbildner, eine Aromatisierung, einen Farbstoff und Kombinationen daraus.

11. Nahrungszusammensetzung nach Anspruch 1 oder 2, weiterhin aufweisend Natrium in einer Menge von 100 mg bis 300 mg pro Portion der Nahrungszusammensetzung.

12. Nahrungszusammensetzung nach Anspruch 1 oder 2, weiterhin aufweisend mindestens eines der folgenden:
a) Hafer, ausgewählt aus der Gruppe aufweisend gekochter Hafer, Hafermehl und Kombinationen daraus;
b) mindestens ein Getreide, ausgewählt aus der Gruppe aufweisend Weizen, Hafer, Reis, Gerste, Amaranth, Faro, Teff, Quinoa, Dinkel, Kamuth, Buchweizen, Roggen, Hirse, Weizenkleie, Psyllium und Kombinationen daraus; und
c) Kombinationen daraus.

13. Nahrungszusammensetzung nach Anspruch 1 oder 2, weiterhin aufweisend mindestens ein funktionales Gewürz, ausgewählt aus der Gruppe aufweisend Zimt, Kurkuma, Gelbwurz, Muskat, Cayennepfeffer, Oregano, Rosmarin, Ingwer, Pfefferminz, Basilikum, Knoblauch und Kombinationen daraus.

14. Nahrungszusammensetzung nach Anspruch 1 oder 2, weiterhin aufweisend mindestens ein Milchprodukt oder mindestens einen Milchproduktersatz oder mindestens ein Milchprodukt und mindestens einen Milchproduktersatz.

15. Nahrungszusammensetzung nach Anspruch 1 oder 2, weiterhin aufweisend ein Süßungsmittel, ausgewählt aus der Gruppe aufweisend mindestens einen künstlichen Süßstoff, mindestens ein Süßungsmittel mit hoher Süßkraft und Kombinationen daraus.

16. Nahrungszusammensetzung nach Anspruch 1 oder 2, weiterhin aufweisend mindestens eine funktionale Zutat, ausgewählt aus der Gruppe aufweisend einen Elektrolyten, ein Vitamin, einen Mineralstoff, ein Probiotikum, ein Präbiotikum, ein Symbiotikum, einen Phytonährstoff, Ginseng, einen Nukleotiden, eine Aminosäure, ein Antioxidans, eine Quelle von Omega-3-Fettsäuren und Kombinationen daraus.

17. Nahrungszusammensetzung nach Anspruch 1 oder 2, weiterhin aufweisend eine Proteinquelle, ausgewählt aus der Gruppe aufweisend Milchproteine, Pflanzenproteine, Tierproteine, künstliche Proteine, engineerte Proteine, synthetisierte Proteine und Kombinationen daraus.

18. Nahrungszusammensetzung nach Anspruch 1 oder 2, wobei im Wesentlichen alle Zutaten der Nahrungszusammensetzung natürliche Zutaten sind.

19. Nahrungszusammensetzung nach Anspruch 1 oder 2, wobei im Wesentlichen alle Zutaten der Nahrungszusammensetzung organische Zutaten sind.

20. Nahrungszusammensetzung nach Anspruch 1 oder 2, wobei die Nahrungszusammensetzung eine Ein-Portionen-Packung, zugeschnitten auf den speziellen Bedarf aufgrund von Sport oder anderen Aktivitäten, ist.

21. Nahrungszusammensetzung nach Anspruch 20, wobei der Sport oder die andere Aktivität ausgewählt ist aus der Gruppe aufweisend Laufen, Radsport, Ausdauertraining, Muskelaufbau, Marathon, Triathlon, Ironman und Kombinationen daraus.

22. Nahrungszusammensetzung nach Anspruch 20, wobei die Nahrungszusammensetzung weiterhin Nitrate in einer Zusammensetzung aufweist, die für die Verwendung vor körperlicher Betätigung formuliert ist.

23. Nahrungszusammensetzung nach Anspruch 20, weiterhin aufweisend Koffein in einer Zusammensetzung, die formuliert ist für die Verwendung während körpenicher Betätigung, bei oder gegen Ende der körperlichen Betätigung, oder während körperlicher Betätigung, und bei und gegen Ende körperlicher Betätigung.

24. Nahrungszusammensetzung nach Anspruch 20, weiterhin aufweisend Protein in einer Zusammensetzung, die für die Verwendung nach körperlicher Betätigung formuliert ist.

25. Nahrungszusammensetzung nach Anspruch 1 oder 2, wobei die Nahrungszusammensetzung in einer Mehrkammer-Packung, aufweisend zwei oder mehr Kammern, bereitgestellt ist.

26. Nahrungszusammensetzung nach Anspruch 25, wobei die Mehrkammer-Packung zwei oder mehr Portionen aufweist.

27. Nahrungszusammensetzung nach Anspruch 25, wobei die Mehrkammer-Packung eine Portion aufweist, die in zwei oder mehr Kammern aufgeteilt ist.

28. Nahrungszusammensetzung nach Anspruch 1 oder 2, wobei die Nahrungszusammensetzung in einer Mehrkammer-Packung bereitgestellt ist, aufweisend eine Rezeptur, ausgewählt aus der Gruppe aufweisend mindestens eine Rezeptur zur Verwendung vor körperlichen Betätigung, mindestens eine Rezeptur zur Verwendung während körperlicher Betätigung, mindestens eine Rezeptur zur Verwendung gegen Ende körperlicher Betätigung, mindestens eine Rezeptur zur Verwendung nach körperlicher Betätigung, und Kombinationen daraus.

29. Nahrungszusammensetzung nach Anspruch 28, wobei die Nahrungszusammensetzung in einer Mehrkammer-Packung, zugeschnitten auf eine bestimmte Sportart oder Aktivität, bereitgestellt ist.

30. Nahrungszusammensetzung nach Anspruch 1 oder 2, wobei die Nahrungszusammensetzung in gefrorener oder fast gefrorener Form verzehrt wird.

31. Nahrungszusammensetzung nach Anspruch 1 oder 2, wobei die Nahrungszusammensetzung ein Verdünnungsmittel aufweist, ausgewählt aus der Gruppe aufweisend Fruchtsaft, Gemüsesaft, Kokoswasser, Wasser, Milch und Kombinationen daraus, wobei das Verdünnungsmittel als Verdünner für die Zwecke der Hydratation verwendet wird.

32. Verfahren zur Bereitstellung einer Nahrung für eine Person, die Sport oder eine andere Aktivität ausübt, wobei das Verfahren folgendes aufweist:
Verabreichen einer Nahrungszusammensetzung an eine Person, aufweisend:
ein Püree, ausgewählt aus der Gruppe aufweisend mindestens ein Fruchtpüree, mindestens ein Gemüsepüree, mindestens ein Fruchtpüreekonzentrat, mindestens ein Gemüsepüreekonzentrat, und Kombinationen draus;
mindestens eine Nussbutter; und
eine Zutat, ausgewählt aus der Gruppe aufweisend Dextrose, Dextrosepolymere, weitere Getreide-/Nuss-Sirups aufweisend Reissirup, Agavensirup, Palmsirup und Kombinationen daraus,
wobei die Nahrungszusammensetzung eine Kohlenhydratfraktion aufweisend Glucose und Fructose in einem Gewichtsverhältnis von 0,5:1 bis 5:1 umfasst,
wobei das Püree in der Nahrungszusammensetzung in einer Menge von 30% bis etwa 100% vorhanden ist, und
wobei die Kohlenhydratfraktion in einer Menge von 10 g bis 45 g pro Portion der Nahrungszusammensetzung vorhanden ist.

## Revendications

1. Composition nutritionnelle de purée comprenant :
une purée choisie parmi le groupe constitué d'au moins une purée de fruits, au moins une purée de légumes, au moins un concentré de purée de fruits, au moins un concentré de purée de légumes, et leurs combinaisons ;
au moins un beurre de fruits à coque ; et
un ingrédient choisi parmi le groupe constitué de dextrose, polymères de dextrose,
autres sirops de céréales/fruits à coque comprenant sirop de riz, sirop d'agave, sirop de palme, et leurs combinaisons,
dans laquelle la composition nutritionnelle comprend une fraction de glucides comprenant du glucose et du fructose selon un rapport de poids de 0,5:1 à 5:1,
dans laquelle la purée est présente dans la composition nutritionnelle dans une quantité allant de 30% à environ 100%, et
dans laquelle la fraction de glucides est présente dans une quantité allant de 10 g à 45 g par portion de la composition nutritionnelle, dans laquelle la portion va de 28, 35 g à 141,75 g.

2. Composition nutritionnelle selon la revendication 1,
dans laquelle la composition nutritionnelle comprend une fraction de glucides comprenant du glucose et du fructose selon un rapport de poids de 2:1 à 4:1,
ou
dans laquelle la purée est présente dans la composition nutritionnelle dans une quantité allant de 60% à 90%, ou
dans laquelle la fraction de glucides est présente dans une quantité allant de 15 g à 35 g par portion de la composition nutritionnelle, dans laquelle la portion va de 28,35 g à 141,75g.

3. Composition nutritionnelle selon la revendication 1 ou 2, dans laquelle ledit au moins un beurre de fruits à coque est choisi parmi le groupe constitué de beurre d'arachide, beurre d'amande, beurre de graines de tournesol, beurre de noix de cajou, beurre de noisette, beurre de noix de macadamia, beurre de noix, beurre de noix de pécan, beurre de pistache, beurre de graines de potiron, beurre de graines de sésame, beurre de soja, et leurs combinaisons.

4. Composition nutritionnelle selon la revendication 1 ou 2, dans laquelle ledit au moins un beurre de fruits à coque comprend du beurre d'arachide.

5. Composition nutritionnelle selon la revendication 1 ou 2, dans laquelle la purée de fruits est choisie parmi le groupe constitué de pomme, orange, poire, pêche, fraise, banane, cerise, ananas, kiwi, raisin, myrtille, framboise, mangue, goyave, canneberge, mûre, fruits tropicaux, fruits d'Amazonie, et leurs combinaisons.

6. Composition nutritionnelle selon la revendication 1 ou 2, dans laquelle la purée de légumes est choisie parmi le groupe constitué d'artichaut, roquette, asperge, avocat, haricots, feuilles de betterave, brocoli, chou de Bruxelles, chou, carotte, céleri, chicorée, feuilles de chou vert, concombre, aubergine, endive, chou frisé, laitue, oignon, pois, poivrons, pomme de terre, potiron, radis, épinard, courge, patate douce, bette à carde, tomate, feuilles de navet, cresson, igname, courgette, et leurs combinaisons.

7. Composition nutritionnelle selon la revendication 1 ou 2, dans laquelle la fraction de glucides comprend en outre de la maltodextrine.

8. Composition nutritionnelle selon la revendication 1 ou 2, dans laquelle la fraction de glucides comprend en outre au moins un concentré de jus.

9. Composition nutritionnelle selon la revendication 1 ou 2, comprenant en outre au moins une fraction de protéines, dans laquelle la fraction de protéines est présente dans une quantité allant de 5 g à 35 g par portion de la composition nutritionnelle.

10. Composition nutritionnelle selon la revendication 1 ou 2, comprenant en outre au moins un composé choisi parmi le groupe constitué de composés aromatiques, fibre, conservateurs, guarana, caféine, nitrates, agents acidifiants, agents liants, matière de production de gel, un arôme, un colorant, et leurs combinaisons.

11. Composition nutritionnelle selon la revendication 1 ou 2, comprenant en outre du sodium dans une quantité allant de 100 mg à 300 mg par portion de la composition nutritionnelle.

12. Composition nutritionnelle selon la revendication 1 ou 2, comprenant en outre au moins un élément parmi :
a) une avoine choisie parmi le groupe constitué d'avoines cuits, farine d'avoine, et leurs combinaisons ;
b) au moins une céréale choisie parmi le groupe constitué de blé, avoine, riz, orge, amarante, farro, teff, quinoa, épeautre, kamut, sarrasin, seigle, millet, son de blé, psyllium, et leurs combinaisons ; et
c) leurs combinaisons.

13. Composition nutritionnelle selon la revendication 1 ou 2, comprenant en outre au moins une épice fonctionnelle choisie parmi le groupe constitué de cannelle, curcumine, curcuma, muscade, poivre de Cayenne, origan, romarin, gingembre, menthe, basilic, ail, et leurs combinaisons.

14. Composition nutritionnelle selon la revendication 1 ou 2, comprenant en outre au moins un produit laitier ou au moins un substitut de produit laitier ou au moins un produit laitier et au moins un substitut de produit laitier.

15. Composition nutritionnelle selon la revendication 1 ou 2, comprenant en outre un édulcorant choisi parmi le groupe constitué d'au moins un édulcorant artificiel, au moins un édulcorant de haute intensité, et leurs combinaisons.

16. Composition nutritionnelle selon la revendication 1 ou 2, comprenant en outre au moins un ingrédient fonctionnel choisi parmi le groupe constitué d'un électrolyte, une vitamine, un minéral, un probiotique, un prébiotique, un symbiotique, un phytonutriment, ginseng, un nucléotide, un acide aminé, un antioxydant, une source d'acides gras oméga-3, et leurs combinaisons.

17. Composition nutritionnelle selon la revendication 1 ou 2, comprenant en outre une source de protéines choisie parmi le groupe constitué de protéines à base laitière, protéines à base végétale, protéines à base animale, protéines artificielles, protéines modifiées, protéines synthétiques, et leurs combinaisons.

18. Composition nutritionnelle selon la revendication 1 ou 2, dans laquelle essentiellement tous les ingrédients de la composition nutritionnelle sont des ingrédients naturels.

19. Composition nutritionnelle selon la revendication 1 ou 2, dans laquelle essentiellement tous les ingrédients de la composition nutritionnelle sont des ingrédients organiques.

20. Composition nutritionnelle selon la revendication 1 ou 2, dans laquelle la composition nutritionnelle est un emballage à une portion conçu pour des besoins spécifiques en raison du sport ou d'une activité.

21. Composition nutritionnelle selon la revendication 20, dans laquelle le sport ou l'activité est choisi parmi le groupe constitué de course à pied, cyclisme, entraînement d'endurance, développement musculaire, marathon, triathlon, Ironman, et leurs combinaisons.

22. Composition nutritionnelle selon la revendication 20, dans laquelle la composition nutritionnelle comprend en outre des nitrates dans une composition formulée pour une utilisation avant l'exercice.

23. Composition nutritionnelle selon la revendication 20, comprenant en outre de la caféine dans une composition formulée pour une utilisation pendant l'exercice, une utilisation dans ou près de la fin de l'exercice, ou une utilisation pendant l'exercice, et une utilisation dans et près de la fin de l'exercice.

24. Composition nutritionnelle selon la revendication 20, comprenant en outre des protéines dans une composition formulée pour une utilisation après l'exercice.

25. Composition nutritionnelle selon la revendication 1 ou 2, dans laquelle la composition nutritionnelle est fournie dans un emballage à chambres multiples comprenant deux chambres ou plus.

26. Composition nutritionnelle selon la revendication 25, dans laquelle l'emballage à chambres multiples comprend deux parties ou plus.

27. Composition nutritionnelle selon la revendication 25, dans laquelle l'emballage à chambres multiples comprend une partie divisée en deux chambres ou plus.

28. Composition nutritionnelle selon la revendication 1 ou 2, dans laquelle la composition nutritionnelle est fournie dans un emballage à chambres multiples comprenant une formulation choisie parmi le groupe constitué d'au moins une formulation pré-exercice, au moins une formulation pendant l'exercice, au moins une formulation près de la fin de l'exercice, au moins une formulation post-exercice, et leurs combinaisons.

29. Composition nutritionnelle selon la revendication 28, dans laquelle la composition nutritionnelle est fournie dans un emballage à chambres multiples conçu pour un sport particulier ou une activité particulière.

30. Composition nutritionnelle selon la revendication 1 ou 2, dans laquelle la composition nutritionnelle est consommée sous forme congelée ou quasi-congelée.

31. Composition nutritionnelle selon la revendication 1 ou 2, dans laquelle la composition nutritionnelle comprend un diluant choisi parmi le groupe constitué de jus de fruits, jus de légumes, eau de coco, eau, lait, et leurs combinaisons, dans laquelle le diluant est utilisé comme un diluant à des fins d'hydratation.

32. Procédé pour assurer la nutrition d'un individu participant à un sport ou une activité, le procédé comprenant :
une administration à l'individu d'une composition nutritionnelle comprenant
une purée choisie parmi le groupe constitué d'au moins une purée de fruits, au moins une purée de légumes, au moins un concentré de purée de fruits, au moins un concentré de purée de légumes, et leurs combinaisons ;
au moins un beurre de fruits à coque ; et
un ingrédient choisi parmi le groupe constitué de dextrose, polymères de dextrose, autres sirops de céréales/fruits à coque comprenant sirop de riz, sirop d'agave, sirop de palme, et leurs combinaisons,
dans lequel la composition nutritionnelle comprend une fraction de glucides comprenant du glucose et du fructose selon un rapport de poids de 0,5: à 5:1,
dans lequel la purée est présente dans la composition nutritionnelle dans une quantité allant de 30% à environ 100%, et
dans lequel la fraction de glucides est présente dans une quantité allant de 10 g à 45 g par portion de la composition nutritionnelle.
